# EUROPEAN PATENT SPECIFICATION

(11) **EP 2 377 488 B1**
(45) Date of publication and mention of the grant of the patent: **10.09.2014**
(21) Application number: 11166741.6
(22) Date of filing: 13.07.2004
(51) Int. Cl.: A61C 5/09, A61C 5/10, A61C 13/08, A61C 13/00, A61C 5/08, A61C 13/09, A61C 13/083

(54) **Method of manufacturing a dental prosthesis and dental porcelain set used for the same**
Verfahren zur Herstellung von Zahnprothesen sowie dafür verwendetes Dentalporzellan-Set
Procédé de production de prothèses dentaires et kit de porcelaine dentaire utilisé pour ce procédé

(30) Priority: 17.07.2003 JP 2003198682; 26.12.2003 JP 2003434350
(43) Date of publication of application: 19.10.2011
(62) Divisional of application: 04747434.1
(73) Proprietor: Kuraray Noritake Dental Inc., Kurashiki-shi, Okayama 710-0801 (JP)
(72) Inventor: Sago, Sumihito, Nagoya-shi Aichi (JP); Sakakibara, Toshio, Nagoya-shi Aichi (JP); Hirata, Tatsuhiko, Nagoya-shi Aichi (JP); Matsumoto, Atsushi, Nagoya-shi Aichi (JP)
(74) Representative: TBK

(56) References cited:
- US-A- 3 934 348
- US-A- 4 307 044

## Description

### TECHNICAL FIELD

The present invention relates to a method of manufacturing a dental prosthesis, and a kit (i.e., dental porcelain set) that is used for the same.

### BACKGROUND ART

A dental prosthesis used in an oral cavity needs to have a strength bearing a strong biting strength, and is also required to have a beauty for having an appearance equivalent to that of a natural tooth. For this reason, conventionally, there is manufactured a dental prosthesis including: a substrate (i.e., a body portion serving as a base (core) of the prosthesis) such as a frame having high strength; and an armored portion formed on the substrate, for providing a color tone similar to that of a natural tooth, or a transparency. As this kind of dental prosthesis, there are some described in Patent Documents 1 and 2, for example. As means for forming the armored portion on the substrate, there is widely used a method of mounting a malaxation of powders of porcelain (i.e., dental ceramic material) with water or solvent prepared exclusively for this purpose, on a surface of the substrate (such as the above-described frame), by an instrument such as brush. In the present application, the armored portion of the dental prosthesis is constituted by the porcelain, and the thus constituted armored portion is referred to as "ceramic layer" where appropriate.

Further, as a method different from the above-described mounting method, there is a casting process, namely, a method of casting a porcelain (forming the armored portion) on a surface of the frame or the like at a high temperature, by using a casting mold having a predetermined configuration. This casting process is advantageous in that the armored portion having predetermined configuration and thickness can be formed on the substrate with a high accuracy. As this kind of technique, there is one disclosed in Patent Document 3.

Further, conventionally, the dental prosthesis has been constituted by covering the surface of a metal frame with the porcelain adjusted to the color tone of the natural tooth. In recent years, however, there is used an all-ceramic prosthesis in which its frame also is constituted by a ceramic material (see Patent Document 4, for example). Such an all-ceramic porcelain provides an advantage eliminating or easing problems such as metal allergy caused by contact of a metal with a living body and impossibility in obtaining the color tone of the natural tooth due to a non-transparent backing layer (or back coating layer) provided to hide a metallic color of the metal frame.

As the above-described all-ceramic prosthesis, there are one constituted in its entirety by a crystallized glass such as silica lithium glass, and one including a frame which is constituted by a ceramic sintered body and an armored portion, i.e., a ceramic layer which is constituted by a glass porcelain and which is formed on a surface of the frame. For example, the above-mentioned Patent Document 4 discloses a two-phase porcelain composition in which leucite crystal phase is dispersed within a feldspar glass matrix.

However, since the ceramic prosthesis constituted in its entirety by the crystallized glass whose mechanical strength and tenacity are relatively low, it can not be used for a bridge or the like required to have a strength, and accordingly its use is limited to a single crown. On the other hand, as the ceramic sintered body constituting the above-described frame, there are spinel, alumina and zirconia. Among them, particularly, the frame made of alumina is frequently used. However, neither alumina nor spinel has a mechanical strength and tenacity that are high enough to be used as a bridge. Therefore, even the ceramic prosthesis with the frame made of the alumina or spinel can replace only a front tooth, where it is used as a bridge. The ceramic prosthesis with the frame made of the alumina or spinel can be used only as a single crown, where it is intended to replace a molar tooth on which a large biting strength acts.

On the other hand, the zirconia is relatively excellent in mechanical strength and tenacity, among the ceramic sintered bodies. The zirconia can be used as a bridge for replacing three teeth including a molar tooth, and also as a bridge for replacing five, six or other large number of teeth. Further, the zirconia can be used even as a full mouth. Moreover, the zirconia advantageously has a color tone desirable in a dentistry use. In particular, it is considered that the zirconia partially stabilized by solid solution with 3 (mol) of Y₂O₈ is the most desirable with respect to mechanical strength, tenacity, and color tone.
[Patent Document 1] JP-H07-23986-A
[Patent Document 2] JP-2000-39953-A
[Patent Document 3] WO01/021088
[Patent Document 4] JP-3351701-B

Further, US 3934348 A discloses a method of forming a porcelain crown that requires no shoulder. In the method, a laboratory plaster model is made from a dentist's impression and includes male and female dies. The male die has successive layers of materials applied thereupon comprising first a 0.002 gauge platinum film followed successively by a first layer of gold crust, a second layer of gold crust and opaque porcelain, upon which a regular porcelain is applied that fits the female die with the regular porcelain receiving thereafter a final application of glazing powder. The crown is baked between each step of the process.

US 4307044 A discloses a pontic having a core constructed from a ceramic material embedded in a metal mass at least a portion of which is itself covered by a layer of porcelain.

### DISCLOSURE OF INVENTION

### OBJECT TO BE SOLVED BY THE INVENTION

By the way, there is a case where a coating including at least two ornament layers is formed as the armored portion on the substrate, in order to express a color tone closer to that of a natural tooth and a light permeability (transparency) on a surface of the dental prosthesis (for example, crown). Since these two layers are fixed on the surface of the substrate such as a frame, by sequentially subjecting the two layers to a heat treatment, there was a case where, during the heat treatment for forming an upper layer of the armored portion, a lower layer previously formed on the surface of the substrate is softened and caused to flow as a result of flow of the porcelain forming the upper layer. if such a flow of the lower layer arises, a thickness of the lower layer is likely to be partially changed, and the frame could be exposed depending upon the case. The partial change of the thickness and the exposure of the frame cause inconveniences that there is a part not providing the desired color tone and transparency and that the prosthesis does not provide the desired configuration. For example, where, on a surface of an ornament layer (hereinafter referred to as "back coating layer") that is formed on the substrate so as to serve as a backing layer, another ornament layer (hereinafter referred to as "cast coating layer") is formed by a casting process, the back coating layer could be partially moved by flow of a casting porcelain (which forms the cast coating layer) when the casting porcelain is cast at a high temperature, and the back coating layer could have variation in its thickness. This causes the formed position and thickness value of the cast coating layer (formed to express the desired color tone and transparency) to be different from those as designed: That is, the above problem is serious, especially, where the armored portion is formed by the casting process.

As is clear from the above description, where a plurality of coating layers are formed on the substrate (typically, where the ornament portion is formed by laminating two or more coating layers) by the casting process, it is required that, when the porcelain for forming the cast coating layer is poured on the surface of the back coating layer, the back coating layer (precisely, the ceramic material forming the back coating layer) is not moved. Thus, a method satisfying such a requirement and materials (e.g., porcelain for forming the backing layer and porcelain for forming the coating layer) suitable to be used for the method are desired.

Coefficients of thermal expansion of titanium, other metal (other than titanium) and alumina as materials conventionally used for forming the frame are about 7.8 × 10⁻⁶(/°C), 11.5 × 10⁻⁶ (/°C) or higher, and 6.8 × 10⁻⁶ (/°C), respectively. On the other hand, coefficient of thermal expansion of zirconia is about 10 × 10⁻⁶ (/ °C), which is different from that of any one of the conventionally used materials. Therefore, in case of use of a porcelain that is prepared to be adjusted to the coefficient of thermal expansion of the conventional material, in a cooling process of a heat treatment carried out for fixing the porcelain to the frame, there is generated a tensile stress acting on a ceramic layer causing a crack, if the coefficient of thermal expansion of the material forming the ceramic layer is higher that of zirconia. On the contrary, in the cooling process, there is generated a tensile stress acting on the frame causing a crack, if the coefficient of thermal expansion of the material forming the ceramic layer is lower than that of zirconia. In view of contraction behavior in the cooling process of the heat treatment, it is desirable that the coefficient of thermal expansion of the ceramic layer is substantially equal to or slightly lower than that of the frame, for preventing the crack. Therefore, there is desired a porcelain which has coefficient of thermal expansion suitable for the frame made of zirconia and which is suitably adjustable to a color tone of a natural tooth.

The present invention was made in view of the above-described background circumstances. It is a first object of the invention is to provide a dental-prosthesis manufacturing method which is, particularly, practiced by casting, and which enables its back coating layer to be formed to have a desired thickness even in case of formation of two or more coating layers on a substrate, and also a kit (combination of materials) to be used in the manufacturing method. It is a second object of the invention is to provide a dental-prosthesis manufacturing method which can be practiced with few risk of crack of frame and ceramic layer even in case where the substrate (i.e., frame) is made of zirconia, and also a dental porcelain set (i.e., kit) preferably used in the manufacturing method.

### MEASURES FORACHIEVING THE OBJECTS

The present invention relates to a method according to claim 1 and to a dental porcelain set according to claim 7. Further developments are set forth in the dependent claims.

### EFFECTS OF THE INVENTION

According to the manufacturing method of the invention, which is also referred to as the "third invention", in the first step as one of the steps of forming the ceramic layers for manufacturing the dental prosthesis, the first ceramic layer of the first composition is fixedly formed on the surface of the frame made of zirconia. After that, in the second step, the second ceramic layer of the second composition is fixedly formed on the first ceramic layer, such that the first ceramic layer is covered with the second ceramic layer. Since the first and second ceramic layers have the above-described first and second compositions, respectively, both of the ceramic layers have substantially the same coefficient of thermal expansion as that of the frame made of zirconia, it is possible to restrain occurrence of crack in the frame or ceramic layers (i.e., armored portion) due to difference in coefficient of thermal expansion, in a cooling process of heat treatment for fixedly forming the ceramic layers, thereby enabling the dental prosthesis to be manufactured without occurrence of crack in the zirconia frame and ceramic layers. It is noted that the first ceramic layer may be formed to cover an entirety of the surface of the frame, or formed such that a part of the surface of the frame is exposed without being covered with the first ceramic layer. The phrase "the first ceramic layer is covered at its surface" is interpreted to encompass not only a case where the first ceramic layer is completely covered, but also a case where the first ceramic layer is covered partially at its surface.

Particularly, where the viscosity of the first ceramic layer (previously formed on the lower side) is higher that that of the second ceramic layer (posteriorly formed on the upper side) at the same temperature, it is possible to restrain the previously formed first ceramic layer from being softened to flow or deform when the second ceramic layer is fixedly formed. It is therefore possible to manufacture the dental prosthesis, with the desired thickness of the first ceramic layer as a lower layer of the two ceramic layers being maintained.

According to the dental porcelain set of the invention, which is also referred to as the "fourth invention", since the set includes the first and second porcelains that generate, by burning or heat treatment, the first ceramic layer of the first composition and the second ceramic layer of the second composition, respectively, the set can be advantageously used in practice of the dental-prosthesis manufacturing method of the invention.

In the third invention, in the first ceramic layer (i.e., product obtained from the first porcelain subjected to burning or heat treatment), SiO₂ is a basic component by which the first ceramic layer takes a vitreous shape. If the mass ratio of SiO₂ is lower than 66.0 (mass %), the viscosity at an operating temperature such as the casting temperature is too low. If it exceeds 72.0 (mass %), the glass softening point is too high. The mass ratio is determined such that the viscosity of the first ceramic layer at the operating temperature (e.g., casting temperature) of the second ceramic layer is higher than that of the second ceramic layer. Al₂O₃ is a component serving to increase the transparency, acid resistance and water resistance, and also to adjust the viscosity. If the mass ratio of Al₂O₃ is lower than 13.5 (mass %), the transparency is not sufficient. If it exceeds 17.8 (mass %), it becomes clouded. Li₂O is a component serving to adjust the coefficient of thermal expansion and the softening point, since Li₂O increases the coefficient of thermal expansion and lowers the softening point. Further, Li₂O also serves to promote precipitation of leucite crystal (KAlSi₂O₆). If the mass ratio of Li₂O is lower than 0.05 (mass %), the coefficient of thermal expansion is reduced and the softening point is elevated. If it exceeds 0.31 (mass %), the coefficient of thermal expansion is too increased. Na₂O is a component serving to lower the softening point. If the mass ratio of Na₂O is lower than 1.3 (mass %), the softening point is elevated. If it exceeds 6.5 (mass %), the water resistance is deteriorated. K₂O is a component serving to adjust amount of precipitation of the leucite crystal. If the mass ratio of K₂O is lower than 8.7 (mass %), the amount of precipitated leucite is reduced whereby a suitable coefficient of thermal expansion can not obtained. If it exceeds 12.5 (mass %), the amount of precipitated leucite becomes too much. Further, Ca, Mg, Sr are components serving, when they are contained with suitable proportions, to improve the acid resistance and water resistance of the glass and accordingly to stabilize the glass. Thus, in order to obtain such effects, it is preferable that the mass ratios of these components are held in respective ranges as given above. Sb₂O₈ is a component serving to prevent yellowing of the glass due to Ag ion. If the mass ratio of Sb₂O₃ is lower than 0.1 (mass %), the yellowing can not be substantially prevented. If it exceeds 0.6 (mass %), there is a part that is not dissolved into the glass. Although Ag is not contained in the main components of the third invention, it is common that a prosthesis containing Ag is used in dentistry, Ag can be a pollution source. CeO₂ is a component serving to adjust the softening point. If the mass ratio of CeO₂ exceeds 3 (mass %), the glass is yellowed. B₂O₃ is also a component serving to adjust the softening point. If the mass ratio of B₂O₃ exceeds 3 (mass %), the water resistance is deteriorated. Thus, the components need to be held within the respective ranges as described above.

In the first ceramic layer, it is more preferable that the mass ratio of SiO₂ is 67-68 (mass %), that of Al₂O₃ is 15.5-16.5 (mass %), that of Li₂O is 0.08-0.12 (mass %), that of Na₂O is 4.5-5.2 (mass %), that of K₂O is 9-11 (mass %), that of CaO is 0.2-0.4 (mass %), that of MgO is 0.1-0.3 (mass %), that of SrO is 0.1-0.3 (mass %), that of Sb₂O₃ is 0.1-0.3 (mass %), that of CeO₂ is 0-1 (mass %) and that of B₂O₃ is 0-1 (mass %), for sufficiently obtaining the effects provided by adding the these components.

In the second ceramic layer (i.e., product obtained from the second porcelain subjected to burning or heat treatment), the effects of the respective main components are substantially the same as those in the first ceramic layer, and the reasons by which the respective mass ratios are determined are substantially the same as those in the first ceramic layer. However, the ratios of the components providing larger influences upon the viscosity are made different from those in the first ceramic layer, for establishing the above-described relationship with respect to the viscosity. Due to the difference in the ratios of the components providing the larger influences, the ratios of the other components are made slightly different from those in the first ceramic layer, too. Specifically, the ratio of the SiO₂ is made smaller and the ratio of Al₂O₃ is made larger, than those in the first ceramic layer.

In the second ceramic layer, it is more preferable that the mass ratio of SiO₂ is 63.5-64.5 (mass %), that of Al₂O₃ is 15.5-16.5 (mass %), that of Li₂O is 0.08-0.12 (mass %), that of Na₂O is 4.5-5.2 (mass %), that of K₂O is 9-11 (mass %), that of CaO is 0.6-0.8 (mass %), that of MgO is 0.6-0.8 (mass %), that of SrO is 0.1-0.3 (mass %), that of Sb₂O₃ is 0.8-1.1 (mass %), that of CeO₂ is 0.5-1 (mass %) and that of B₂O₃ is 0.8-1.4 (mass %), for sufficiently obtaining the effects provided by adding the these components.

Matters (e.g., means for forming the coating layers, and casting process) which are necessary for carrying out the present invention and which are other than matters (e.g., viscosities and compositions of the first and second porcelains) particularly referred in the present specification can be grasped as matters that can be designed by a person with ordinary skill in a field to which the invention pertains, on the basis of a prior art in the field. The present invention can be carried out based on matters disclosed in the present specification and also matters known in the field. It is noted that the term "mass %" is substantially synonymous with a term "wt %" that has been previously used.

The "dental prosthesis" referred in the present specification is a prosthesis that is to be provided within an oral cavity, and is not particularly limited but may be any prosthesis that can be manufactured by methods disclosed herein. The third and fourth inventions are equally applicable to various kinds of dental prostheses, specifically, such as bridge, full mouth, crown and covering crown.

In the third invention, a basic configuration of the substrate such as the frame is suitably determined, conforming to position and configuration of a tooth that is compensated by the prosthesis. The substrate can be formed, for example, conforming to configuration of a broken tooth or a ground tooth from which a decayed portion has been removed.

As a method of forming the substrate, any conventionally known means may be employed. Specifically, for example, by cast forming with use of a tooth form model having a desired configuration, it is possible to easily and accurately form the substrate. Alternatively, depending upon content of the prosthesis, the substrate may be provided by one that has been previously formed conforming to a mount portion of existing tooth form and/or oral cavity. Further, either available one of them may be used as the substrate (e.g., frame) of the dental prosthesis.

The substrate or frame does not necessarily have to consist of only a main body of the substrate or frame, but may additionally include some coating which is previously formed on a surface of the main body and which is constituted by one or at least two materials different from the material of the substrate or frame. In practice of the present invention, the substrate or frame encompasses such a one that includes the coating previously formed on the main body. In such a substrate, too, the present invention can be carried out by forming the above-described back coating layer or first ceramic layer.

In the third invention, preferably, the viscosity of the first ceramic layer at the temperature of the heat treatment for generating the second ceramic layer in the second step is higher than that of the second ceramic layer. That is, the first porcelain is adapted such that, at the temperature of the heat treatment for generating the ceramic layer from the second porcelain, the viscosity of the ceramic layer generated from the first porcelain is higher than that of the ceramic layer generated from the second porcelain. That is, it is preferable that the first and second ceramic layers and first and second porcelains are selected from among the ranges of the above-described compositions such that the above condition is satisfied. The heat treatment temperature is determined depending upon the compositions of the first and second ceramic layers, and is set within a range of 750-1100 (°C), for example, and more preferably a range of 950-1050 (°C).

Preferably, the above-described second step is implemented by filling, with a predetermined fluidity material, a predetermined void whose inner wall surface is partially constituted by the surface of the first ceramic layer. That is, the second step is implemented to form the second ceramic layer by pouring or injecting the fluidity material, i.e., the second porcelain onto the first ceramic layer. Although the second step can be implemented by mounting a malaxation of powders of the porcelain with a predetermined solvent, on the surface of the frame, by an instrument such as brush, the manufacturing method of the third invention and the dental porcelain set of the fourth invention are advantageously applied, particularly, to the manufacturing method in which the void is filled with the material. In such a manufacturing method, the ceramic layer can be formed with high accuracy in its configuration and thickness, and the second porcelain is pressed against the first ceramic layer with a relatively large force, for the purpose of causing the second porcelain to be distributed into an entirety of the void. Therefore, as compared with the case where the second porcelain is mounted by the brush or the like, in the case where the second porcelain is poured or injected, the effect provided by the arrangement in which the viscosity of the second ceramic layer is lower than that of the first ceramic layer at the same temperature, is more remarkable.

Preferably, the above-described second step is implemented by filling the void with the fluidity material whose fluidity is increased by heating the fluidity material. In this arrangement, the fluidity of the fluidity material, i.e., the second porcelain is increased by heating when it is filled into the void, so that the previously formed first ceramic layer is heated to a high temperature. Therefore, in this arrangement, the effect provided by the determination of the compositions of the first and second ceramic layers such that the viscosity of the second ceramic layer (i.e., second porcelain) at the temperature in the implementation of the second step is sufficiently lower that that of the first ceramic layer, is more remarkable.

When the second porcelain is filled into the void, as described above, it is preferable that, for example, the ingot having the above-described second composition is introduced through an opening of the void while being heated to be softened. However, the second porcelain taking the form of the powders may be introduced through the opening to be filled into the void. Where the ingot is introduced is introduced into the void, a suitable length of time for softening the second porcelain ranges, for example, from about five minutes to three hours, and more preferably from ten minutes to one hour. The force by which the second porcelain is pressed into the void ranges from 0.1 (MPa) to 5 (MPa), and more preferably not larger than 1 (MPa). The heating temperature is not particularly limited, as long as it enables the second porcelain to be sufficiently softened. The heating temperature is set within a range of 750-1100 (°C), for example, and more preferably a range of 950-1050 (°C). The ingot can be produced in accordance with any one of known suitable methods. For example, the glass ingot can be produced by crushing and mixing ceramic materials constituting components of the desired glass composition, heating and melting the mixture, filling a mold having a desired size with the molten mixture, and cooling the mixture.

Preferably, the above-described first step is implemented by filling, with a predetermined fluidity material, a predetermined void whose inner wall surface is partially constituted by the surface of the frame. That is, the first ceramic layer as well as the second ceramic layer may be formed by the casting or injection molding.

However, the first ceramic layer does not necessarily have to be formed by the casting or injection molding, but may be formed in accordance with one that is selected from among conventionally known various methods, as the above-described back coating layer.

The thickness of the first ceramic layer is suitably determined depending upon, for example, the configuration and color tone that are required in the prosthesis. In case of the dental prosthesis such as crown and bridge, the thickness of the first ceramic layer disposed on the frame is held within a range of about 0.01-0.3 (mm), for example, about 0.2 (mm).

The thickness of the second ceramic layer is suitably determined for establishing the desired color tone and transparency. In case of the dental prosthesis such as crown and bridge, the thickness of the second ceramic layer is preferably held within a range of about 0.8-1.5 (mm), for example, about 1.0 (mm).

The second step includes a sub-step of forming, on at least a part of the surface of the first ceramic layer, a model layer made of a material that is eliminable by burning thereof, a sub-step of embedding the model layer in a material constituting the casting mold, and a sub-step of forming the casting mold, which is provided with the void corresponding to the model layer, by burning and eliminating the model layer after hardening the material constituting the casting mold. The material constituting the casting mold is constituted by a so-called investment material such as phosphate-based, plaster-based, ethyl-silicate-based and alumina-cement-based investment materials, and is particularly preferably hardenable in an ordinary temperature. The casting mold is produced with implementation of the above-described sub-steps, and the second ceramic layer is formed by using the casting mold, so that it is possible to form the casting mold having the void whose dimensions and configuration correspond to those of the model layer. The model layer is required to be constituted by the material that is eliminable by burning thereof, and is preferably excellent in its formability.

Preferably, each of the first and second ceramic layers, i.e., each of the first and second porcelains is constituted by a corresponding one of the first and second compositions, an auxiliary component for adjusting the color tone, and inevitable impurity. That is, each of the ceramic layers and porcelains of the present invention may contain, in addition to its main component, the auxiliary component for adjusting the color tone. As the inevitable impurity, for example, there is Fe₂O₃ that could be contained therein by a small amount.

Preferably, the above-described auxiliary component is provided by at least one of pigment, fluorescent material and emulsion agent. As the emulsion agent, there are ZrO₂, SnO₂, TiO₂, Al₂O₃, CeO₂, for example.

Preferably, each of the first and second ceramic layers has coefficient of thermal expansion ranging from 9.1 × 10⁻⁶ (/ °C) to 10.3 × 10⁻⁶ (/ °C) at a temperature ranging from 25 (°C) to 500 (°C). This arrangement advantageously restrains breakage of the ceramic layer and frame, since the coefficient of thermal expansion of zirconia is about 10 × 10⁻⁶ (/ °C) as described above.

Preferably, the auxiliary component of the second ceramic layer is determined such that the transparency of the second ceramic layer is higher than that of the first ceramic layer. Owing to this arrangement, it is possible to obtain the dental prosthesis having the armored portion which is constituted by at least two layers (ornament layers) i.e., the first and second ceramic layers and which has an excellent beauty. Further, as needed, an additional porcelain may be mounted on a part or an entirety of the surface of the second ceramic layer, so that the dental prosthesis having an excellent beauty still closer to a natural tooth can be obtained. Such an additional porcelain may be formed by either mounting or casting. Where the additional porcelain is formed by casting, it is preferable to select a material for the additional porcelain, whose viscosity is lower than that of the second ceramic layer at the same temperature.

Preferably, in each of the above-described first and second steps, a heat treatment or a burning treatment is carried out when the first or second ceramic layer is formed on the frame or first ceramic layer. That is, after being provided on the surface by the applying, casting process or the like, the ceramic layer is heated whereby the ceramic layer can be bonded to the frame or another ceramic layer (located on a lower side of the ceramic layer in question) with an increased bonding strength. This heat treatment serves also as a step of burning and eliminating an organic substance, where the first and second porcelains are used while being mixed with the organic substance such as resin and solvent.

The temperature of the heat treatment, which is suitably determined depending upon, for example, the composition of each of the first and second ceramic layers. The temperature at which the first and second ceramic layers are heated is preferably 950-1100 (°C) and more preferably 1000-1050 (°C). Although the treatment environment is not particularly limited, the treatment is carried out at the atmosphere or reduced pressure.

Preferably, each of the first and second porcelains is prepared by: mixing compounds which generate oxides at a predetermined glass melting temperature ranging, for example, from 1000 (°C) to 1500 (°C); melting the mixture by heating the mixture, for example, at the atmosphere (e.g., 1000 (°C) or higher); cooling and recycling the mixture; further crushing the mixture; subjecting the mixture to a heat treatment that is carried out, for example, at a temperature ranging from 800 (°C) to 1000 (°C) for a length of time of about 30-60 minutes such that a suitable amount of leucite crystal is precipitated; adding pigment and fluorescent material to the mixture; further mixing the mixture; and crushing the mixture. In the above-described mixing and crushing, a ball mill, Ishikawa-type crusher, planetary mill or the like is preferably used.

In the above-described material composition, as sources supplying each of elements constituting the porcelain, for example, there are alkali-feldspar as source of Si, Al, K and Na; SiO₂ as source of Si; Al₂O₃ and Al(OH)₃ as source of Al; Li₂CO₃ and LiOH as source of Li; Na₂CO₃ and NaOH as source of Na; K₂CO₃ and KOH as source of K; MgO, MgCO₃ and Mg(OH)₂ as source of Mg; CaCO₃ and Ca(OH)₂ as source of Ca; Sb₂O₃ as source of Sb; CeO₂ as source of Ce; and H₃BO₃ as source of B. The supplying sources are not limited to those described above, but may be other sources which can constitute the composition as described.

Preferably, each of the first and second ceramic layers includes leucite crystal. The inclusion of the leucite crystal further increases tenacity of the ceramic layer and facilitates adjustment of coefficient of thermal expansion of the ceramic layer. The leucite crystal is included in the ceramic layer such that its mass ratio is held within a range of 2-65 (mass %).

### BRIEF DESCRIPTION OF DRAWINGS

**[****Fig. 1****]** A schematic view for explaining a stage of a method of manufacturing a tooth crown and showing a cross section of a frame used for manufacturing the tooth crown.
**[****Fig. 2****]** A view for explaining a stage following the stage of Fig. 1, and showing a state in which a backing layer (back coating layer, i.e., first ceramic layer) is formed on a surface of the frame.
**[****Fig. 3****]** A view for explaining a stage following the stage of Fig. 2, and showing a state in which a model layer is formed on a surface of the backing layer.
**[****Fig. 4****]** A view for explaining a stage following the stage of Fig. 3, and showing a state in which the frame (on which the backing layer and the model layer have been formed) is attached to a pedestal.
**[****Fig. 5****]** A view for explaining a stage following the stage of Fig. 4, and showing a state in which a dental investment material is poured inside a casting ring disposed on the pedestal.
**[****Fig. 6****]** A view for explaining a stage following the stage of Fig. 5, and showing a state in which there is prepared a casting mold having a void portion that is formed as a result of burnout of the model layer.
**[****Fig. 7****]** A view for explaining a stage following the stage of Fig. 6, and showing a dental crown in which a coat layer (cast coating layer, i.e., second ceramic layer) is formed on the surface of the backing layer.
**[****Fig. 8****]** A process drawing for explaining a method of manufacturing a ceramic layer used for manufacturing a prosthesis according to an embodiment of the present invention.
**[****Fig. 9****]** A schematic view for explaining a stage of a method of manufacturing a bridge according to a another embodiment of the present invention, and showing a state of a missing tooth.
**[****Fig. 10****]** A view for explaining a stage following the stage of Fig. 9, and showing the stage in which abutment teeth are formed so that the bridge is mounted on the abutment teeth.
**[****Fig. 11****]** A view for explaining a stage following the stage of Fig. 10, and showing a frame prepared in a position that is to be compensated.
**[****Fig. 12****]** A view for explaining a stage following the stage of Fig. 11, and showing the stage in which a first ceramic layer is formed on a surface of the frame.
**[****Fig. 13****]** A view for explaining a stage following the stage of Fig. 12, and showing a state in which a model layer is formed on a backing layer and is set on a former.
**[****Fig. 14****]** A view for explaining a stage following the stage of Fig. 13, and showing a state in which a coat layer is formed.
**[****Fig. 15****]** A view showing a cross section of a pontic of the bridge, taken along line XV-XV in Fig. 14.

### EXPLANATION OF REFERENCE SIGN

10: frame, 12: surface, 14: first ceramic layer (backing layer, back coating layer), 16: surface, 18: void portion, 20: model layer, 22: pin, 24: porcelain introducing passage, 26: pedestal, 28: casting ring, 30: dental investment, 32: casting mold, 34: ceramic holding portion, 36: second ceramic layer (coating layer, cast coating layer), 38: dental crown (dental prosthesis), 40: upper jaw, 42: missing tooth, 44, 46: tooth, 48, 50: abutment tooth, 52: frame, 54, 56, 58: core element, 60: first ceramic layer, 62: model layer, 64: former, 66: second ceramic layer, 68: bridge, 70: pontic

### BEST MODE FOR CARRYING OUT THE INVENTION

Hereinafter examples of the present invention will be explained in detail with reference to the drawings. It is noted that the following examples are illustrated in the drawings in simplified or modified manner, as needed, and that a ratio of dimensions and a configuration of each component are not necessarily accurately illustrated. Further, through the following examples, it is not intended that the present invention is limited to what are shown in the examples.

### < Example 1 (Reference Example)>

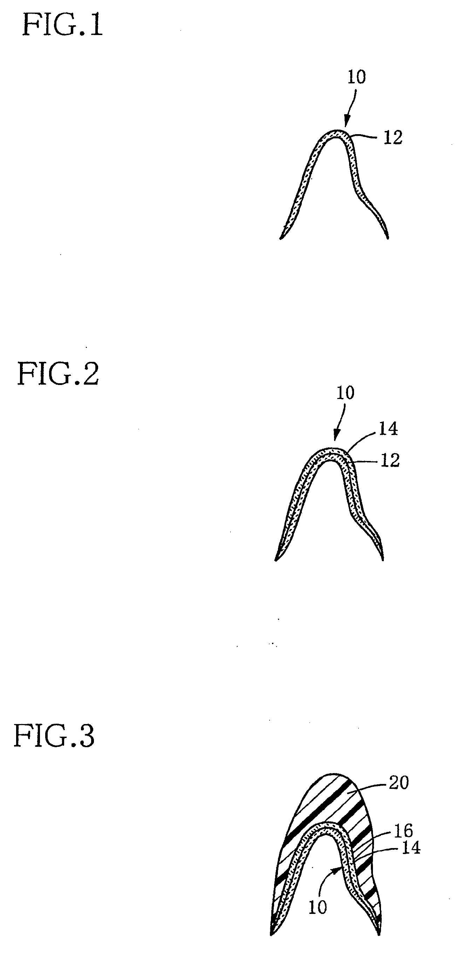

Figs. 1 - 7 are schematic views for explaining a method of manufacturing a dental crown 38 as a Reference example of a dental prosthesis. The crown 38 is to be mounted, for example, as a front tooth of an upper jaw of an adult. The present invention is applicable also to all other teeth. In Fig. 1, the frame 10 made of zirconia (single crown frame) produced separately is prepared. This frame 10 made of zirconia is produced by conventionally known means, for example, forming a denture mold with plaster and pouring the zirconia into the denture mold.

First, a first porcelain was uniformly applied (mounted) with a brush, onto a surface 12 of the above-described frame 10 made of the zirconia, such that the first porcelain had a thickness of about 0.1 (mm). The first porcelain used herein is slurry including ceramic powders of composition indicated in Table 1 given below and prepared by mixing 100 mass parts of propyleneglycol-water solution to 100 mass parts of the ceramic powders.

After being mounted, the first porcelain was burned at 1050 (°C), so that a back coating layer 14 was formed on an entirety of the surface 12 of the frame 10 as shown in Fig. 2.

**[Table 1]**

| | | FIRST PORCELAIN | SECOND PORCELAIN |
|---|---|---|---|
| MATERIAL COMPOSITION (Mass %) | SiO₂ | 68.7 | 65.0 |
| | Al₂O₃ | 14.0 | 16.0 |
| | K₂O | 9.0 | 10.0 |
| | Na₂O | 5.0 | 5.0 |
| | Li₂O | 0.3 | 0.3 |
| | ZrO₂ | 3.0 | -- |
| | B₂O₃ | -- | 1.0 |
| | CaO | -- | 1.0 |
| | CeO₂ | -- | 0.7 |
| | MgO | -- | 1.0 |
| VISCOSITY AT CASTING TEMPERATURE | | 9 × 10⁶ (cP) | 5.5 × 10⁶ (cP) |

Subsequently, as shown in Fig. 3, a model layer 20 having a desired shape of the crown was formed, by using a dental wax (e.g., "Blue Inlay Wax" manufactured by GC Corporation), on a surface 16 of the obtained back coating layer 14.

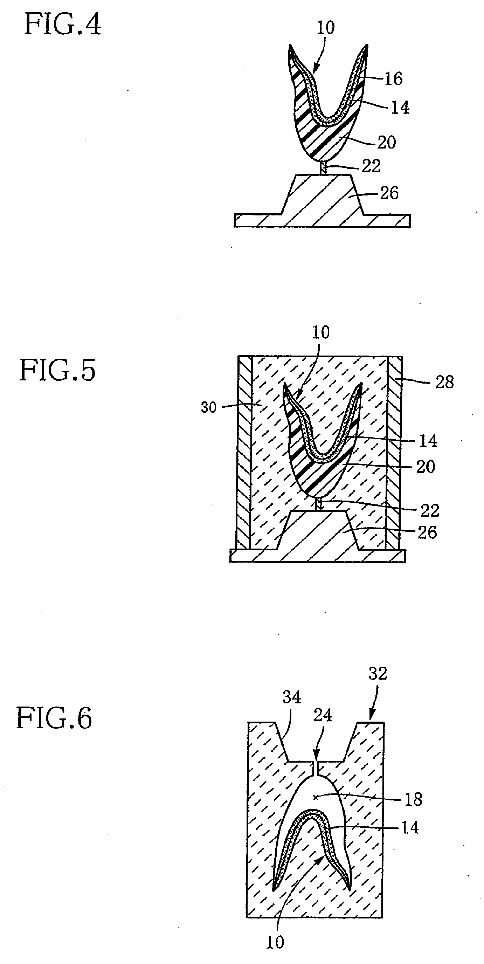

Then, as shown in Fig. 4, a pin 22 called a sprue line (e.g., "Ready Casting Wax" manufactured by GC Corporation) was attached to the model layer 20, and the sub-assembly was transferred to a pedestal 26. Further, as shown in Fig. 5, a casting ring 28, which is typically made of a metal or a rubber, was disposed on the pedestal 26. Then, a dental investment material 30 (e.g., "Cergo fit SPEED" manufactured by DeguDent Company) that is hardenable at normal temperature was poured inside the casting ring 28, so that the model layer 20 together with the frame 10 was embedded in the investment material 30.

After the investing material 30 had been hardened, the pin 22 and the pedestal 26 were removed, and a hardened body constituted by the investment material 30 inside which the frame 10 was disposed was transferred into an electric furnace. The hardened body was heated to 850 (°C) in the furnace, and was held at the temperature for one hour, so that the model layer 20 was burned to be eliminated, whereby a casting mold 32 was prepared. In the prepared casting mold 32, there was a void portion 18 provided by a portion in which the eliminated model layer had been present.

Subsequently, a glass composite (powders) as a second porcelain having composition indicated in Table 1, which had been crystallized by a heat-treatment, were installed in a die and pressed by a plunger. After that, the glass composite was heated and then gradually cooled, so as to be preliminarily formed to have a columnar shape.

This glass ingot was disposed, together with a plunger (not shown) operable to press the glass ingot into the casting mold 32, in a ceramic holding portion (portion in which the pedestal had been present) 34 of the casting mold 32. Then, the thus disposed glass ingot was set in a hot press furnace (type: EP500 manufactured by Ibokura Co. Ltd.). The glass ingot was heated to 1050 (°C) in the hot press furnace, and was held at the temperature for 20 minutes. After that, the softened ingot (i.e., second porcelain) was pressed by the plunger with a pressure of about 0.5 (MPa) acting in a direction toward the casting mold 32. By this operation, the second porcelain of molten state was poured into the casting mold through a porcelain introducing passage 24 (i.e., portion in which the pin 22 had been present), so that the void portion 18 was filled with the second porcelain.

Viscosities of the first and second porcelains in this instance, i.e., at the casting temperature (1050 (°C)) are indicated in Table 1. It is noted that, in this Example, the viscosities were measured by a high temperature viscometer with parallel plates (type: PPVM-1350) available from NEWMAN-TECH CORP.

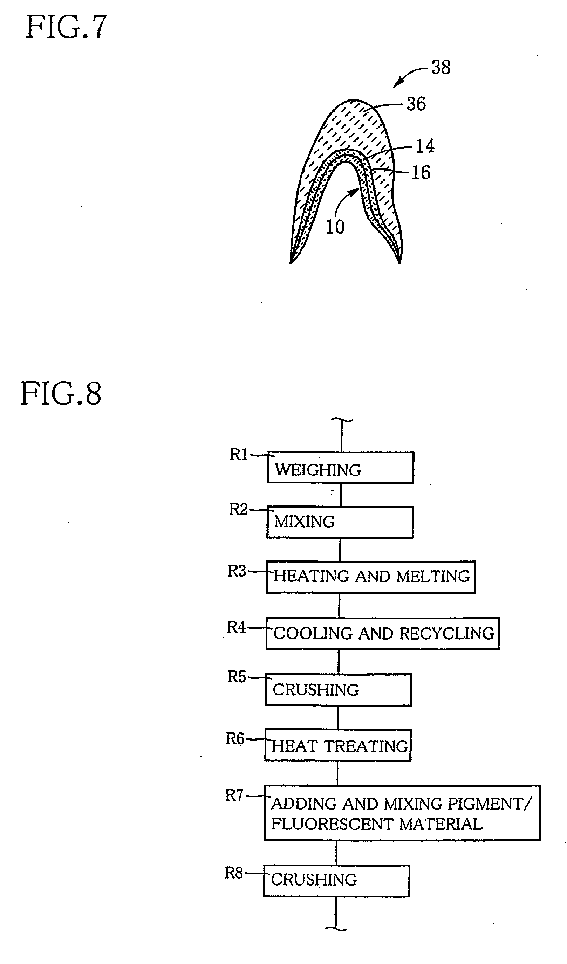

After the second porcelain had been filled in the void portion 18 within the casting mold 32, the second porcelain was held at 1050 (°C) for another ten minutes, and then cooled. After the second porcelain had been cooled completely, the casting mold 32 was broken, and a crown 38 was taken out. By the above processing, there was obtained the crown 38 in which a cast coating layer 36 was formed on the surface 16 of the back coating layer 14, as shown in Fig. 7.

In a visual observation of a cross section obtained by cutting the crown 38, it was confirmed that the back coating layer 14 covered an entirety of the frame 10 while a thickness of the back coating layer 14 was held substantially at its designed value without movement and deformation of the back coating layer 14. Further, the crown 38 had an appearance close to that of a natural tooth.

### < Examples 2-10 (Reference Examples)>

In each of these examples, a dental crown having the same configuration as Example 1 was manufactured in the same manner as in Example 1, except that the second porcelain in the form of ceramic powders having composition indicated in Table 2 was used and that viscosity of the second porcelain at the casting temperature was as indicated in Table 2. It is noted that "VISCOSITY" in Table 2 indicates a value at the casting temperature.

**[Table 2]**

| No. | SiO₂ | Al₂O₃ | K₂O | Na₂O | Li₂O | B₂O₃ | CaO | CeO₂ | MgO | Sb₂O₃ | ZrO₂ | VISCOSITY (cP) |
|---|---|---|---|---|---|---|---|---|---|---|---|---|
| 2 | 64.3 | 15.8 | 9.9 | 5.9 | 0.3 | 0.1 | 1.0 | 0.7 | 1.0 | 1.0 | -- | 4.5 × 10⁶ |
| 3 | 62.6 | 17.8 | 9.7 | 4.9 | 0.3 | 1.0 | 1.0 | 0.7 | 1.0 | 1.0 | -- | 5.0 × 10⁶ |
| 4 | 63.9 | 15.8 | 9.9 | 4.9 | 0.3 | 1.0 | 1.0 | 0.7 | 1.0 | 1.0 | 0.5 | 5.3 × 10⁶ |
| 5 | 64.7 | 16.0 | 10.0 | 5.0 | 0.3 | 1.0 | 1.0 | -- | 1.0 | 1.0 | -- | 5.4 × 10⁶ |
| 6 | 64.3 | 16.2 | 10.6 | 4.8 | 0.2 | 0.8 | 1.2 | 0.8 | 0.1 | 1.0 | -- | 6.3 × 10⁶ |
| 7 | 65.4 | 15.2 | 10.5 | 4.8 | 0.4 | 0.8 | 1.0 | 0.8 | 0.1 | 1.0 | -- | 6.4 × 10⁶ |
| 8 | 66.7 | 16.0 | 9.0 | 4.5 | 0.3 | 1.0 | 1.5 | -- | 1.0 | 1.0 | -- | 7.2 × 10⁶ |
| 9 | 66.0 | 15.9 | 10.0 | 4.5 | 0.1 | 0.8 | 0.7 | 0.8 | 0.2 | 1.0 | -- | 7.5 × 10⁶ |
| .0 | 66.6 | 16.4 | 9.2 | 4.1 | 0.1 | 0.8 | 0.5 | 0.8 | 0.5 | 1.0 | -- | 8.5 × 10⁶ |

| | | | | | | | | | | | | |
|---|---|---|---|---|---|---|---|---|---|---|---|---|
| (Indicating composition of second porcelain used in each Example: (mass %)) | | | | | | | | | | | | |

As is apparent from Table 2, in all of Examples, the viscosity (9 × 10⁶ (cP)) of the first porcelain (forming the back coating layer) at the casting temperature was higher than the viscosity (from 4.5 × 10⁶ to 8.5 × 10⁶ (cP)) of the second porcelain (forming the cast coating layer) at the casting temperature. Therefore, as in Example 1, it was confirmed that the back coating layer covered an entirety of the frame with its thickness being substantially constant, without notable movement and deformation of the back coating layer after the casting. Further, the obtained crown had an appearance close to that of a natural tooth.

Particularly, in Examples 2, 3, 4 and 5, the viscosity (9 × 10⁶ (cP)) of the first porcelain (forming the back coating layer) was at least 1.5 times as high as the viscosity (from 5 × 10⁶ to 6 × 10⁶ (cP)) of the second porcelain (forming the cast coating layer). Thus, any movement and deformation of the back coating layer were not confirmed at all. Further, the obtained crown had an excellent appearance as that of a natural tooth.

### <Example 11 (Reference Example)>

In this Example, a frame made of a metal was used as the substrate. The metal frame is constituted by 78 (mass %) of Au, 7.1 (mass %) of Pt, 9.8 (mass %) of Pd, 2.4 (mass %) of Ag and inevitable impurity.

Further, in this Example, a back coating layer was formed in the same manner as in Example 1, except that the first porcelain used herein included ceramic powders of composition indicated in Table 3 in place of the composition indicated in Table 1 and that a burning temperature of the back coating layer was 980 (°C).

**[Table 3]**

| | | FIRST PORCELAIN | SECOND PORCELAIN |
|---|---|---|---|
| MATERIAL COMPOSITION (Mass %) | SiO₂ | 47.7 | 64.5 |
| | Al₂O₃ | 14.0 | 14.3 |
| | K₂O | 10.0 | 10.0 |
| | Na₂O | 6.0 | 9.0 |
| | Li₂O | 0.3 | 0.3 |
| | ZrO₂ | -- | 0.5 |
| | CaO | 1.0 | 1.0 |
| | MgO | 1.0 | 0.4 |
| | SnO₂ | 20.0 | -- |
| VISCOSITY AT CASTING TEMPERATURE | | 1.5 × 10⁷ (cP) | 1 × 10⁷ (cP) |

Subsequently, a cast coating layer was formed in the same manner as in Example 1, except that the second porcelain used herein included ceramic powders of composition indicated in Table 3 in place of the ceramic powders of the composition indicated in Table 1, that a burning temperature of the back coating layer was 980 (°C), and that the length of time for which the burning temperature was held was changed from 20 minutes to 15 minutes. It is noted that viscosities of the first and second porcelains at the casting temperature were as indicated in Table 3.

In a visual observation of a cross section obtained by cutting the crown, any movement and deformation of the back coating layer were not confirmed at all, since the viscosity (1.5 × 10⁷ (cP)) of the first porcelain (forming the back coating layer) was at least 1.5 times as high as the viscosity (1 × 10⁷ (cP)) of the second porcelain (forming the cast coating layer). Further, the obtained crown had an excellent appearance as that of a natural tooth.

### < Examples 12-19 (Reference Examples)>

In each of these examples, a dental crown was manufactured in the same manner as in Example 11, except that the second porcelain in the form of ceramic powders having composition indicated in Table 4 was used and that viscosity of the second porcelain at the casting temperature was as indicated in Table 4. It is noted that "VISCOSITY" in Table 4 indicates a value at the casting temperature.

**[Table 4]**

| No. | SiO₂ | Al₂O₃ | K₂O | Na₂O | Li₂O | B₂O₃ | CaO | ZrO₂ | MgO | Sb₂O₃ | VISCOSITY (cP) |
|---|---|---|---|---|---|---|---|---|---|---|---|
| 12 | 62.6 | 13.9 | 9.7 | 11.7 | 0.2 | -- | 1.0 | 0.5 | 0.4 | -- | 0.6 × 10⁷ |
| 13 | 64.5 | 14.6 | 9.6 | 9.2 | 0.4 | -- | 0.8 | -- | 0.1 | 0.8 | 1.18 × 10⁷ |
| 14 | 64.5 | 14.3 | 10.0 | 8.5 | 0.3 | 0.5 | 1.0 | 0.5 | 0.4 | -- | 1.2 × 10⁷ |
| 15 | 64.9 | 14.6 | 8.6 | 8.5 | 0.4 | -- | 2.1 | -- | 0.1 | 0.8 | 1.25 × 10⁷ |
| 16 | 64.4 | 14.3 | 9.6 | 9.1 | 0.4 | -- | 0.8 | 0.5 | 0.1 | 0.8 | 1.26 × 10⁷ |
| 17 | 64.8 | 14.6 | 8.7 | 9.7 | 0.4 | -- | 0.8 | -- | 0.1 | 0.9 | 1.27 × 10⁷ |
| 18 | 64.8 | 14.6 | 9.4 | 9.8 | 0.4 | -- | 0.1 | -- | 0.1 | 0.8 | 1.30 × 10⁷ |
| 19 | 66.9 | 15.5 | 7.2 | 8.0 | 1.0 | -- | 0.7 | -- | 0.1 | 0.6 | 1.48 × 10⁷ |

### (Indicating composition of second porcelain used in each Example: (mass %))

As is apparent from Table 4, in all of Examples, since the viscosity (1.5 × 10⁷ (cP)) of the first porcelain (forming the back coating layer) at the casting temperature was higher than the viscosity (from 0.6 × 10⁷ to 1.48 × 10⁷ (cP)) of the second porcelain (forming the cast coating layer) at the casting temperature, the back coating layer covered an entirety of the frame with its thickness being substantially constant, with little movement and deformation of the back coating layer. Further, the obtained crown had an appearance close to that of a natural tooth. Particularly, in the crown of Example 12, since the viscosity (1.5 × 10⁷ (cP)) of the first porcelain (forming the back coating layer) was at least twice as high as the viscosity (0.6 × 10⁷ (cP)) of the second porcelain (forming the cast coating layer), movement and deformation of the back coating layer were effectively prevented. The obtained crown of Example 12 had an excellent appearance close to that of a natural tooth.

### < Comparative Example 1>

A dental crown was manufactured in the same manner as in Example 1, except that the first porcelain in the form of ceramic powders having composition indicated in Table 5 was used and that viscosity of the first porcelain at the casting temperature 1050 (°C) was as indicated in Table 5.

**[Table 5]**

| | | FIRST PORCELAIN |
|---|---|---|
| MATERIAL COMPOSITION (Mass %) | SiO₂ | 65.7 |
| | Al₂O₃ | 11.0 |
| | K₂O | 8.0 |
| | Na₂O | 7.0 |
| | Li₂O | 0.3 |
| | ZrO₂ | 5.0 |
| | CaO | 1.0 |
| | B₂O₃ | 1.0 |
| | CeO₂ | 1.0 |
| VISCOSITY AT CASTING TEMPERATURE | | 1 × 10⁶ (cP) |

In a visual observation of a cross section obtained by cutting the crown, it was confirmed that the back coating layer was moved together with the poured second porcelain and was exposed in a frame opening portion (margin portion), since the viscosity (1 × 10⁶ (cP)) of the first porcelain (forming the back coating layer) was lower than the viscosity (5.5 × 10⁶ (cP)) of the second porcelain (forming the cast coating layer). Further, the thickness of the back coating layer is increased as viewed in a direction toward the margin portion, so that unevenness of the color occurred.

### < Comparative Example 2>

A dental crown was manufactured in the same manner as in Example 2, except that the first porcelain in the form of ceramic powders having composition indicated in Table 6 was used and that viscosity of the first porcelain at the casting temperature 960 (°C) was as indicated in Table 6.

**[Table 6]**

| | | FIRST PORCELAIN |
|---|---|---|
| MATERIAL COMPOSITION (Mass %) | SiO₂ | 45.7 |
| | Al₂O₃ | 13.0 |
| | CaO | 1.0 |
| | K₂O | 10.0 |
| | Na₂O | 10.0 |
| | Li₂O | 0.3 |
| | SnO₂ | 20.0 |
| VISCOSITY AT CASTING TEMPERATURE | | 1 × 10⁶ (cP) |

In a visual observation of a cross section obtained by cutting the crown, it was confirmed that the back coating layer was moved together with the poured second porcelain and was exposed in a frame opening portion (margin portion), since the viscosity (1 × 10⁶ (cP)) of the first porcelain (forming the back coating layer) was lower than the viscosity (1 × 10⁷ (cP)) of the second porcelain (forming the cast coating layer). Further, the thickness of the back coating layer is increased as viewed in a direction toward the margin portion, so that unevenness of the color occurred.

### < Example 20 >

Next, there will be explained Example according to the third and fourth inventions of the present invention. Since the dental crown 38 manufactured in this Example is substantially the same as that shown in Figs. 1-7, differences will be principally explained with reference to Figs. 1-7.

In this Example, a first porcelain shown in Table 7 given below was prepared in place of the above-described first porcelain, and the prepared first porcelain was uniformly applied (mounted) with a brush, onto the surface 12 of the above-described frame 10 made of the zirconia, such that the first porcelain had a thickness of about 0.2 (mm). The first porcelain used herein is slurry including ceramic powders of composition indicated in Table 7 given below and prepared by mixing 100 (wt parts) of propyleneglycol-water solution to 100 (wt parts) of the ceramic powders. After being mounted, the first porcelain was burned at 1050 (°C), so that a first ceramic layer (i.e., back coating layer) 14 was formed on an entirety of the surface 12 of the frame 10 as shown in Fig. 2.

**[Table 7]**

| | | FIRST PORCELAIN | SECOND PORCELAIN |
|---|---|---|---|
| MATERIAL COMPOSITION (Mass %) | SiO₂ | 67.5 | 64.2 |
| | Al₂O₃ | 15.9 | 15.9 |
| | Li₂O | 0.1 | 0.1 |
| | Na₂O | 4.8 | 4.7 |
| | K₂O | 10.0 | 10.0 |
| | CaO | 0.3 | 0.7 |
| | MgO | 0.2 | 0.7 |
| | Sb₂O₃ | 0.2 | 1.0 |
| | CeO₂ | 0 | 0.7 |
| | B₂O₃ | 0 | 1.2 |
| | ZrO₂ | 1.0 | 0 |
| COEFFICIENT OF THERMAL EXPANSION(/°C) | | 9.8 × 10⁻⁶ | 9.6 × 10⁻⁶ |

The first porcelain was composed, for example, in accordance with a manufacturing process shown in Fig. 8. That is, in weighing step R1, compounds for forming oxide at a glass melting temperature within a range of 1000-1500 (°C), for example, is weighed. In mixing step R2, the compounds are mixed by using ball mill, Ishikawa-type crusher or the like. Subsequently, after the mixture has been heated at 1000 (°C) or higher in an atmosphere so as to be melted in heating and melting step R3, the molten mixture is cooled and recycled in cooling and recycling step R4. Subsequently, in crushing step R5, the mixture is further crushed by using ball mill, planetary mill or the like. Subsequently, in a heat treating step R6, the crushed material is subjected to a heat treatment that is carried out, for example, at a temperature within a range of 800-1100 (°C) for about 30-60 minutes. As a result of this, there is precipitated leucite crystal. By controlling this, it is possible to adjust coefficient of thermal expansion. Subsequently, in pigment/fluorescent material adding and mixing step R7, the material is mixed with pigment and fluorescent material by using ball mill, Ishikawa-type crusher or the like. In crushing step R8 following step R7, the mixture is crushed whereby the first porcelain is obtained. The material used herein is suitably selected among various materials that are sources of supplying the above-described elements. In the porcelain, fluorescent material and pigment are included, in addition to the above-described main components.

Subsequently, as shown in Fig. 3, the model layer 20 was formed on the surface 16 of the obtained first ceramic layer 14, and the casting mold 32 was formed as in the same manner as in the above-described Example 1 in accordance with Figs. 4-6. It is noted that, in this Example, the heating temperature for burning and removing the model layer 20 is about 800 (°C), for example.

Subsequently, glass powders as a second porcelain having composition indicated in Table 7 were prepared, and a glass composite (powders) which had been crystallized as in the same manner as in the above-described Example 1 was composed. Further, the glass composite was formed, by using a mold pressing machine or the like, into a columnar shape having a diameter of about 10 (mm) and a height of about 10 (mm), for example. After that, the glass composite was subjected to a burning treatment at temperature of about 1050 (°C) and then gradually cooled, whereby a columnar-shaped glass ingot was obtained. This glass ingot, as in the above-described Example 1, was mounted in the ceramic holding portion 34 of the casting mold 32, and was heated in a hot press furnace so as to be softened. The ingot of molten state, i.e., the second porcelain was poured into the casting mold, so that the void portion 18 was filled with the second porcelain. In this instance of the pouring, viscosity of the second porcelain, i.e., the second ceramic layer (i.e., coating layer) 36 was 1 × 10⁷ (cP), which was sufficiently higher than 5 × 10⁶ (cP) that is viscosity of the first ceramic layer 14 at the same temperature.

The second porcelain poured into the casting mold as described above was cooled. After the second porcelain had been cooled completely, the casting mold 32 was broken, and the crown 38 was taken out. By the above processing, like in the above-described Examples, there was obtained the crown 38 in which the second ceramic layer 36 was formed on the surface 16 of the first ceramic layer 14, as shown in Fig. 7. In an observation of a surface of the obtained crown 38, it was confirmed that the crown was given a desired configuration without any crack. Further, the crown 38 had an appearance close to that of a natural tooth. Commonly, a third ceramic layer formed of a porcelain having a still higher transparency is disposed on a part or entirety of the surface of the second ceramic layer 36, so that the appearance of the crown becomes closer to that of a natural tooth. However, the provision of the third ceramic layer is not indispensable, and it is omitted in Fig. 7.

That is, according to the present Example, the composition used as the first porcelain for forming the first ceramic layer 14 contains 67.5 (mass %) of SiO₂, 15.9 (mass %) of Al₂O₃, 0.1 (mass %) of Li₂O, 4.8 (mass %) of Na₂O, 10.0 (mass %) of K₂O, 0.3 (mass %) of CaO, 0.2 (mass %) of MgO, 0.2 (mass %) of Sb₂O₃ and 1.0 (mass %) of ZrO₂, while the composition used as the second porcelain for forming the second ceramic layer 36 on the first ceramic layer 14 contains 64.2 (mass %) of SiO₂, 15.9 (mass %) of Al₂O₃, 0.1 (mass %) of Li₂O, 4.7 (mass %) of Na₂0, 10.0 (mass %) of K₂O, 0.7 (mass %) of CaO, 0.7 (mass %) of MgO, 1.0 (mass %) of Sb₂O₃, 0.7 (mass %) of CeO₂ and 1.2 (mass %) of B₂O₃. Thus, since either of the first and second porcelains have coefficient of thermal expansion substantially the same as that of the frame 10 made of zirconia, it is possible to restrain occurrence of crack thereof in the process of cooling in the heat treatment. Further, at the same temperature, the viscosity of the first ceramic layer 14 earlier formed on the lower side is higher than the viscosity of the second ceramic layer 36 formed on the first ceramic layer 14, so that it is possible to restrain the earlier formed first ceramic layer 14 from being softened to be caused to flow and deform when the second ceramic layer 36 is fixedly formed on the first ceramic layer 14.

The second porcelain was prepared with state of powders in place of the glass ingot as described above. The thus prepared second porcelain was disposed on the first ceramic layer 14 in the same manner as the first porcelain and was then subjected to a burning treatment at temperature of about 930 (°C), for example. Substantially the same crown 38 was obtained also by such a manufacturing method. It was confirmed that the obtained crown 38 had a desired configuration without any crack on its surface.

### < Comparative Example 3 >

There will be explained results of tests in which conventional porcelains were used in place of the above-described first and second porcelains.

First, on the frame 10 made of zirconia, third and fourth porcelains of Table 8 given below, which had been conventionally used for a metal frame, were sequentially mounted and subjected to respective burning treatments. The third porcelain constituting the backing layer was burned at temperature of about 960 (°C), while the fourth porcelain constituting the coating layer was burned at temperature of about 930 (°C). In an observation of appearance of the obtained crown after it had been cooled, there were confirmed cracks on the ceramic layers (i.e., the backing and coating layers). In the porcelains, fluorescent material and pigment are included, in addition to the below-described main components.

**[Table 8]**

| | | THIRD PORCELAIN | FOURTH PORCELAIN |
|---|---|---|---|
| MATERIAL COMPOSITION (Mass %) | SiO₂ | 52.2 | 65.6 |
| | Al₂O₃ | 11.6 | 14.6 |
| | Li₂O | 0.3 | 0.4 |
| | Na₂O | 7.5 | 9.3 |
| | K₂O | 7.1 | 8.8 |
| | CaO | 0.6 | 0.7 |
| | MgO | 0.5 | 0.6 |
| | SnO₂ | 20.0 | 0 |
| COEFFICIENT OF THERMAL EXPANSION(/°C) | | 12.3 × 10⁻⁶ | 12.3 × 10⁻⁶ |

< Comparative Example 4 >

Next, on the frame 10 made of zirconia, fifth and sixth porcelains of Table 9 given below, which had been conventionally used for an alumina frame, were sequentially disposed and subjected to respective burning treatments. The fifth porcelain constituting the backing layer and the sixth porcelain constituting the coating layer were burned at temperature of about 960 (°C). In an observation of appearance of the obtained crown after it had been cooled, there were confirmed cracks on the frame 10. In the porcelains, fluorescent material and pigment are included, in addition to the below-described main components.

**[Table 9]**

| | | FIFTH PORCELAIN | SIXTH PORCELAIN |
|---|---|---|---|
| MATERIAL COMPOSITION (Mass %) | SiO₂ | 74.0 | 75.3 |
| | Al₂O₃ | 8.6 | 9.5 |
| | Li₂O | 0.3 | 0.4 |
| | Na₂O | 5.7 | 6.3 |
| | K₂O | 5.0 | 5.5 |
| | CaO | 0.6 | 0.7 |
| | MgO | 0.5 | 0.5 |
| | ZrO₂ | 2.7 | 0 |
| | CeO₂ | 0 | 1.1 |
| COEFFICIENT OF THERMAL EXPANSION(/°C) | | 6.8 × 10⁻⁶ | 6.8 × 10⁻⁶ |

### < Example 21 >

Next, there will be explained other Examples according to the third and fourth inventions.

While there have been explained cases where the present invention is applied to the single crown the above-described Example, the dental prosthesis manufactured by the manufacturing method of the third invention can be advantageously applied also to a bridge for replacing teeth including a molar tooth, since the zirconia frame 10 having high strength is used in the dental prosthesis.

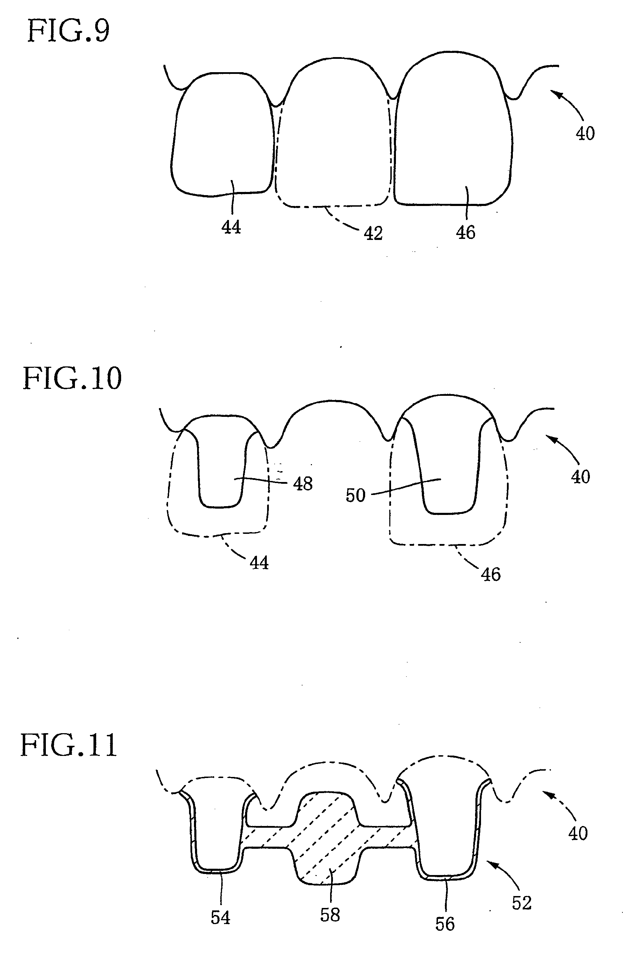

Fig. 9-15 are views for explaining a method of manufacturing a three-teeth bridge 68 for substituting an adult molar tooth as a missing tooth. Fig. 9 shows a main portion of an upper jaw 40 in which one tooth is missed. In Fig. 9, the missing tooth 42 is indicated by one-dot chain line in a center of the figure. Fig. 10 shows a stage in which abutment teeth 48, 50 are formed by grinding teeth 44, 46 that are located on opposite sides of the missing tooth 42. The subsequent step is implemented to prepare a frame (three-teeth bridge frame) 52 made of zirconia and having an inner contour that is slightly larger than an outer contour of the formed abutment teeth 48, 50. Fig. 11 shows a cross section of the prepared frame 52. The preparation of the frame 52 is made by CAD/CAM method or the like in which configuration of the upper jaw 40 having the abutment teeth 48, 50 formed therein is measured and a ceramic block is machined into a desired configuration. The frame 52 consists of core elements (i.e., frames of so-called copying portions) 54, 56 corresponding to the respective abutment teeth 48, 50, and a core element (i.e., frame of a so-called pontic portion) 58 corresponding to the missing tooth 42, wherein the core elements 54, 56 are connected to the core element 58.

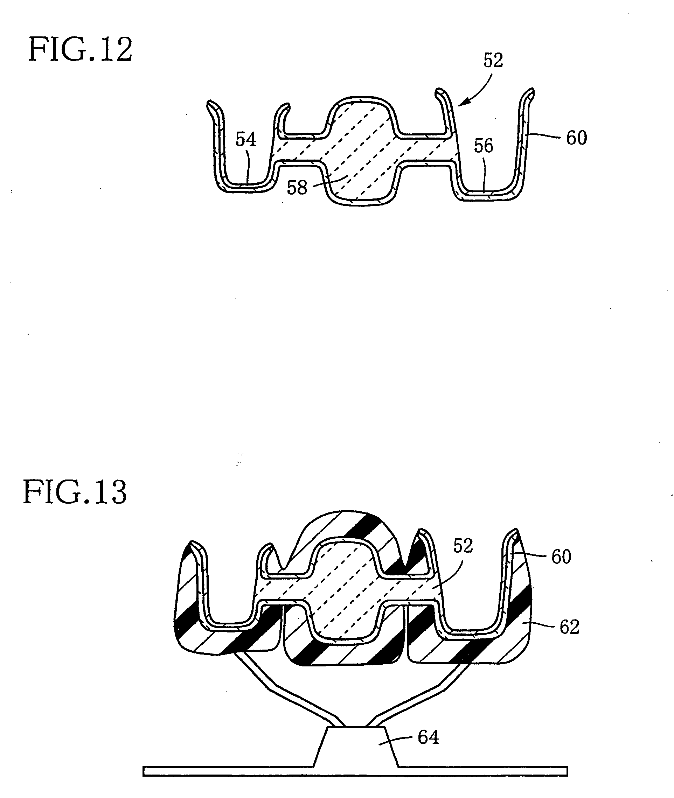

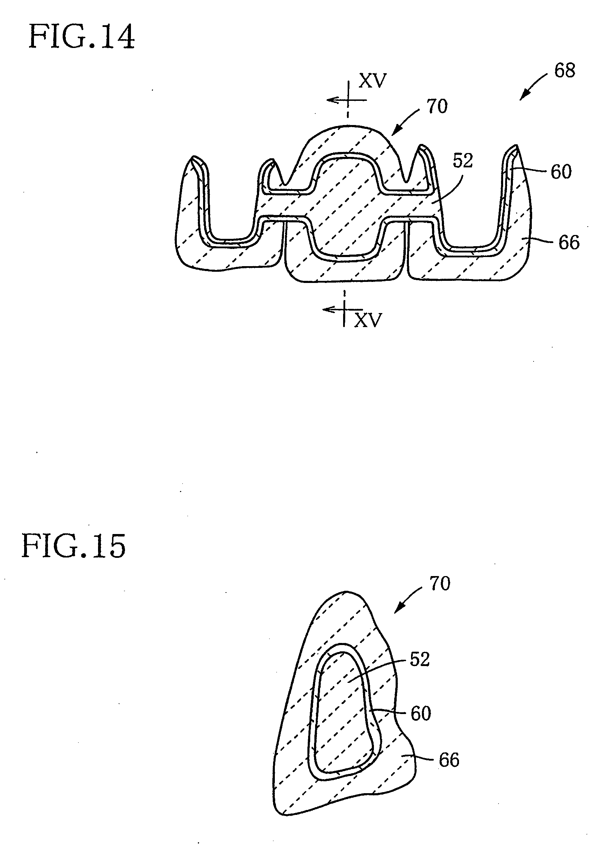

Subsequently, in a stage shown in Fig. 12, on a surface of the frame 52, a first ceramic layer 60 is mounted in substantially the same manner as the above-described crown. As shown in the figure, the first ceramic layer 60 is arranged to cover an outside surface of each of the core elements 54, 56 and an entire surface of the core element 58. Subsequently, in a stage shown in Fig. 13, on a surface of the first ceramic layer 60, a model layer 62 having a configuration of the teeth 44, 46 and missing tooth 42 is formed of wax or the like. Then, the assembly is set on a former 64. A method of forming the model layer 62 and a method of setting on the former 64 are substantially the same as in the manufacturing of the crown. Like the above-described case shown in Fig. 5, a casting ring is disposed around the assembly, so that the assembly is embedded in an investment material poured inside the casting ring whereby the investment material is given a desired configuration. Then, the model layer 62. i.e., wax, is burned out, and a void corresponding to the model layer 62 is formed (see Fig. 6). The formed void is then filled with the second porcelain for forming a second ceramic layer 66. A bridge 68 as shown in Fig. 14 is obtained after being taken out of the casting mold. Fig. 15 shows a cross section (taken along line XV-XV in Fig. 14) of a portion (pontic) 70 of the manufactured bridge 68, which portion corresponds to the missing tooth located in a center of the bridge 68.

In the bridge 68 manufactured as described above, the first ceramic layer 60 and the second ceramic layer 66 both had desired configurations and thickness values. There was not seen crack or the like at all in the first and second ceramic layers 60, 66 and frame 52. Further, the bridge 68 had an appearance close to that of a natural tooth, and were provided with strength and tenacity sufficient for serving as replacement of a molar teeth. In the bridge 68, too, a third ceramic layer having a still higher transparency is disposed on a part or entirety of the surface of the second ceramic layer 66, as needed. However, the provision of the third ceramic layer is not indispensable, and it is omitted in Figs. 14 and 15.

## Claims

1. A method of manufacturing a dental prosthesis (38; 68), by fixing at least two ceramic layers (14, 36; 60, 66) onto a surface of a frame (10; 52) made of zirconia, wherein steps of forming the ceramic layers comprising:
a first step of fixedly forming, on the surface of the frame, a first ceramic layer (14; 60) of a first composition which contains, as main components, 66.0-72.0 (mass %) of SiO₂, 13.5-17.8 (mass %) of Al₂O₃, 0.05-0.31 (mass %) of Li₂O, 1.3-6.5 (mass %) of Na₂O, 8.7-12.5 (mass %) of K₂O, 0.1-0.5 (mass %) of CaO, 0.01-0.22 (mass %) of MgO, 0.1-0.6 (mass %) of Sb₂O₃, 0-3 (mass %) of CeO₂, 0-3 (mass %) of B₂O₃ and 0-3 (mass %) of SrO; and
a second step of fixedly forming, on a surface of the first ceramic layer, a second ceramic layer (36; 66) of a second composition which contains, as main components, 63.0-69.0 (mass %) of SiO₂, 14.8-17.9 (mass %) of Al₂O₃, 0.02-0.28 (mass %) of Li₂O, 1.5-6.8 (mass %) of Na₂O, 8.0-14.0 (mass %) of K₂O, 0.2-1.5 (mass %) of CaO, 0.05-0.55 (mass %) of MgO, 0.2-2.2 (mass %) of Sb₂O₃, 0.1-3 (mass %) of CeO₂, 0.1-3 (mass %) of B₂O₃ and 0-3 (mass %) of SrO, such that the first ceramic layer is covered at its surface with the second ceramic layer.

2. The method according to claim 1, wherein viscosity of the first ceramic layer (14; 60) at a temperature of heat treatment for forming the second ceramic layer (36; 66) in the second step, is higher than that of the second ceramic layer (36; 66).

3. The method according to claim 1, wherein the second step for forming the second ceramic layer (36; 66) is implemented by filling, with the second composition, a void (18) whose inner wall surface is partially constituted by the surface of the first ceramic layer (14; 60).

4. The method according to claim 3, wherein the second step is implemented by filing the void (18) with the second composition whose fluidity is increased by heating the second composition.

5. The method according to claim 3, wherein the first step for forming the first ceramic layer (14; 60) is implemented by filling, with the first composition, a void (18) whose inner wall surface is partially constituted by the surface of the frame (10; 52).

6. The method according to claim 1, wherein each of the first and second ceramic layers (14, 36; 60, 66) has coefficient of thermal expansion ranging from 9.1 × 10⁻⁶ (/°C) to 10.3 × 10⁻⁶ (/°C) at a temperature ranging from 25 (°C) to 500 (°C).

7. A dental porcelain set used for manufacturing a dental prosthesis (38; 68) by fixedly forming at least two ceramic layers (14, 36; 60, 66) on a surface of a frame (10; 52) made of zirconia, the dental porcelain set being constituted by at least two kinds of porcelains for forming the ceramic layers, the dental porcelain set comprising:
a first porcelain forming a first composition which contains, as expressed in terms of oxide, main components in the form of 66.0-72.0 (mass %) of SiO₂, 13.5-17.8 (mass %) of Al₂O₃, 0.05-0.31 (mass %) of Li₂O, 1.3-6.5 (mass %) of Na₂O, 8.7-12.5 (mass %) of K₂O, 0.1-0.5 (mass %) of CaO, 0.01-0.22 (mass %) of MgO, 0.1-0.6 (mass %) of Sb₂O₃, 0-3 (mass %) of CeO₂, 0-3 (mass %) of B₂O₃, and 0-3 (mass %) of SrO; and
a second porcelain forming a second composition which contains, as expressed in terms of oxide, main components in the form of 63.0-69.0 (mass %) of SiO₂, 14.8-17.9 (mass %) of Al₂O₃, 0.02-0.28 (mass %) of Li₂O, 1.5-6.8 (mass %) of Na₂O, 8.0-14.0 (mass %) of K₂O, 0.2-1.5 (mass %) of CaO, 0.05-0.55 (mass %) of MgO, 0.2-2.2 (mass %) of Sb₂O₃, 0.1-3 (mass %) of CeO₂, 0.1-3 (mass %) of B₂O₃, and 0-3 (mass %) of SrO.

8. The dental porcelain set according to claim 7, wherein each of the first and second porcelains has, after burning thereof, coefficient of thermal expansion ranging from 9.1 × 10⁻⁶ (/°C) to 10.3 × 10⁻⁶ (/°C) at a temperature ranging from 25 (°C) to 500 (°C).

9. The dental porcelain set according to claim 7, wherein each of the first and second porcelains is prepared by: mixing compounds which generate oxides at a glass melting temperature; melting the mixture by heating the mixture; crushing the mixture; subjecting the mixture to a heat treatment that is carried out at a predetermined temperature such that leucite crystal is precipitated; adding pigment and fluorescent to the mixture; and crushing the mixture.

## Patentansprüche

1. Verfahren zum Herstellen einer Dentalprothese (38; 68) durch Fixieren zumindest zweier keramischer Schichten (14, 36; 60, 66) auf eine Oberfläche eines Rahmens (10; 52), hergestellt aus Zirkonoxid, wobei die Schritte des Bildens der keramischen Schichten umfassen:
einen ersten Schritt des fixierten Bildens, auf einer Oberfläche des Rahmens, einer ersten keramischen Schicht (14; 60) aus einer ersten Zusammensetzung, welche als Hauptbestandteile enthält 66,0-72,0 (Masse-%) SiO₂, 13,5-17,8 (Masse-%) Al₂O₃, 0,05-0,31 (Masse-%) Li₂O, 1,3-6,5 (Masse-%) Na₂O, 8,7-12,5 (Masse-%) K₂O, 0,1-0,5 (Masse-%) CaO, 0,01-0,22 (Masse-%) MgO, 0,1-0,6 (Masse-%) Sb₂O₃, 0-3 (Masse-%) CeO₂, 0-3 (Masse-%) B₂O₃ und 0-3 (Masse-%) SrO; und
einen zweiten Schritt des fixierten Bildens, auf einer Oberfläche der ersten keramischen Schicht, einer zweiten keramischen Schicht (36; 66) aus einer zweiten Zusammensetzung, welche als Hauptbestandteile enthält 63,0-69,0 (Masse-%) SiO₂, 14,8-17,9 (Masse-%) Al₂O₃, 0,02-0,28 (Masse-%) Li₂O, 1,5-6,8 (Masse-%) Na₂O, 8,0-14,0 (Masse-%) K₂O, 0,2-1,5 (Masse-%) CaO, 0,05-0,55 (Masse-%) MgO, 0,2-2,2 (Masse-%) Sb₂O₃, 0,1-3 (Masse-%) CeO₂, 0,1-3 (Masse-%) B₂O₃ und 0-3 (Masse-%) SrO, so dass die erste keramische Schicht an deren Oberfläche mit der zweiten keramischen Schicht bedeckt ist.

2. Verfahren nach Anspruch 1, wobei die Viskosität der ersten keramischen Schicht (14; 60) bei einer Temperatur der Wärmebehandlung zum Bilden der zweiten keramischen Schicht (36; 66) in dem zweiten Schritt höher ist als die der zweiten keramischen Schicht (36; 66).

3. Verfahren nach Anspruch 1, wobei der zweite Schritt zum Bilden der zweiten keramischen Schicht (36; 66) durch Befüllen, mit der zweiten keramischen Zusammensetzung, eines Freiraums (18), dessen innere Wandoberfläche teilweise durch die Oberfläche der ersten keramischen Schicht (14; 60) aufgebaut ist, implementiert wird.

4. Verfahren nach Anspruch 3, wobei der zweite Schritt durch Befüllen des Freiraums (18) mit der zweiten Zusammensetzung, deren Fluidität durch Erwärmen der zweiten Zusammensetzung erhöht ist, implementiert wird.

5. Verfahren nach Anspruch 3, wobei der erste Schritt zum Bilden der ersten keramischen Schicht (14; 60) durch Befüllen, mit der ersten Zusammensetzung, eines Freiraums (18), dessen innere Wandoberfläche teilweise durch die Oberfläche des Rahmens (10; 52) aufgebaut ist, implementiert wird.

6. Verfahren nach Anspruch 1, wobei jede aus der ersten und zweiten keramischen Schicht (14, 36; 60, 66) einen thermischen Expansionskoeffizienten aufweist, der von 9,1 x 10⁻⁶ (/°C) bis 10,3 x 10⁻⁶ (/°C) bei einer Temperatur, die von 25 (°C) bis 500 (°C) reicht, aufweist.

7. Dentalporzellansatz, der zum Herstellen einer Dentalprothese (38; 68) durch fixiertes Bilden zumindest zweier keramischer Schichten (14, 36; 60, 66) auf eine Oberfläche eines Rahmens (10; 52), hergestellt aus Zirkonoxid, verwendet wird, wobei der Dentalporzellansatz durch zumindest zwei Porzellanarten zum Bilden der keramischen Schichten aufgebaut ist, wobei der Dentalporzellansatz umfasst:
ein erstes Porzellan, das eine erste Zusammensetzung bildet, welche, bezogen auf Oxid ausgedrückt, Hauptbestandteile enthält, in der Form von 66,0-72,0 (Masse-%) SiO₂, 13,5-17,8 (Masse-%) Al₂O₃, 0,05-0,31 (Masse-%) Li₂O, 1,3-6,5 (Masse-%) Na₂O, 8,7-12,5 (Masse-%) K₂O, 0,1-0,5 (Masse-%) CaO, 0,01-0,22 (Masse-%) MgO, 0,1-0,6 (Masse-%) Sb₂O₃, 0-3 (Masse-%) CeO₂, 0-3 (Masse-%) B₂O₃, und 0-3 (Masse-%) SrO; und
ein zweites Porzellan, das eine zweite Zusammensetzung bildet, welche, bezogen auf Oxid ausgedrückt, Hauptbestandteile enthält, in der Form von 63,0-69,0 (Masse-%) SiO₂, 14,8-17,9 (Masse-%) Al₂O₃, 0,02-0,28 (Masse-%) Li₂O, 1,5-6,8 (Masse-%) Na₂O, 8,0-14,0 (Masse-%) K₂O, 0,2-1,5 (Masse-%) CaO, 0,05-0,55 (Masse-%) MgO, 0,2-2,2 (Masse-%) Sb₂O₃, 0,1-3 (Masse-%) CeO₂, 0,1-3 (Masse-%) B₂O₃, und 0-3 (Masse-%) SrO.

8. Dentalporzellansatz nach Anspruch 7, wobei jedes aus dem ersten und zweiten Porzellan nach dessen Brennen einen thermischen Expansionskoeffizienten, der von 9,1 x 10⁻⁶ (/°C) bis 10,3 x 10⁻⁶ (/°C) bei einer Temperatur, die von 25 (°C) bis 500 (°C) reicht, aufweist.

9. Dentalporzellansatz nach Anspruch 7, wobei jedes aus dem ersten und dem zweiten Porzellan angefertigt ist durch: Mischen von Verbindungen, welche bei einer Glasschmelztemperatur Oxide bilden; Schmelzen der Mischung durch Erwärmen der Mischung; Zerstoßen der Mischung; Unterziehen der Mischung einer Wärmebehandlung, die bei einer vorbestimmten Temperatur ausgeführt wird, so dass Leucitkristall präzipitiert wird; Zugeben von Pigment und Fluoreszent zu der Mischung; und Zerstoßen der Mischung.

## Revendications

1. Procédé de fabrication d'une prothèse dentaire (38 ; 68), par la fixation d'au moins deux couches de céramique (14, 36 ; 60, 66) sur une surface d'un cadre (10 ; 52) réalisé en zircone, dans lequel les étapes de formation des couches de céramique comprenant :
une première étape de formation fixe, sur la surface du cadre, d'une première couche de céramique (14 ; 60) d'une première composition qui contient, en tant que composants principaux, 66,0 à 72,0 (% en masse) de SiO₂, 13,5 à 17,8 (% en masse) de Al₂O₃, 0,05 à 0,31 (% en masse) de Li₂O, 1,3 à 6,5 (% en masse) de Na₂O, 8,7 à 12,5 (% en masse) de K₂O, 0,1 à 0,5 (% en masse) de CaO, 0,01 à 0,22 (% en masse) de MgO, 0,1 à 0,6 (% en masse) de Sb₂O₃, 0 à 3 (% en masse) de CeO₂, 0 à 3 (% en masse) de B₂O₃ et 0 à 3 (% en masse) de SrO ; et
une deuxième étape de formation fixe, sur une surface de la première couche de céramique, d'une deuxième couche de céramique (36 ; 66) d'une deuxième composition qui contient, en tant que composants principaux, 63,0 à 69,0 (% en masse) de SiO₂, 14,8 à 17,9 (% en masse) de Al₂O₃, 0,02 à 0,28 (% en masse) de Li₂O, 1,5 à 6,8 (% en masse) de Na₂O, 8,0 à 14,0 (% en masse) de K₂O, 0,2 à 1,5 (% en masse) de CaO, 0,05 à 0,55 (% en masse) de MgO, 0,2 à 2,2 (% en masse) de Sb₂O₃, 0,1 à 3 (% en masse) de CeO₂, 0,1 à 3 (% en masse) de B₂O₃ et 0 à 3 (% en masse) de SrO, de sorte que la première couche de céramique soit recouverte, au niveau sa surface, de la deuxième couche de céramique.

2. Procédé selon la revendication 1, dans lequel la viscosité de la première couche de céramique (14 ; 60) à une température de traitement thermique pour la formation de la deuxième couche de céramique (36 ; 66) dans la deuxième étape, est supérieure à celle de la deuxième couche de céramique (36 ; 66).

3. Procédé selon la revendication 1, dans lequel la deuxième étape pour la formation de la deuxième couche de céramique (36 ; 66) est mise en oeuvre en remplissant, avec la deuxième composition, une cavité (18) dont la surface de paroi intérieure est constituée partiellement par la surface de la première couche de céramique (14 ; 60).

4. Procédé selon la revendication 3, dans lequel la deuxième étape est mise en oeuvre en remplissant la cavité (18) avec la deuxième composition dont la fluidité augmente par le chauffage de la deuxième composition.

5. Procédé selon la revendication 3, dans lequel la première étape pour la formation de la première couche de céramique (14 ; 60) est mise en oeuvre en remplissant, avec la première composition, une cavité (18) dont la surface de paroi intérieure est constituée partiellement par la surface du cadre (10 ; 52).

6. Procédé selon la revendication 1, dans lequel chacune des première et deuxième couches de céramique (14, 36 ; 60, 66) présente un coefficient de dilatation thermique se situant dans la plage allant de 9,1 x 10⁻⁶(/°C) à 10,3 x 10⁻⁶(/°C) à une température se situant dans la plage allant de 25 (°C) à 500 (°C).

7. Kit de porcelaine dentaire utilisé pour la fabrication d'une prothèse dentaire (38 ; 68) en formant de manière fixe au moins deux couches de céramique (14, 36 ; 60, 66) sur une surface d'un cadre (10 ; 52) réalisé en zircone, le kit de porcelaine dentaire étant constitué par au moins deux types de porcelaine pour la formation des couches de céramique, le kit de porcelaine dentaire comprenant :
une première porcelaine formant une première composition qui contient, tels que représentés en termes d'oxyde, des composants principaux sous la forme de : 66,0 à 72,0 (% en masse) de SiO₂, 13,5 à 17,8 (% en masse) de Al₂O₃, 0,05 à 0,31 (% en masse) de Li₂O, 1,3 à 6,5 (% en masse) de Na₂O, 8,7 à 12,5 (% en masse) de K₂O, 0,1 à 0,5 (% en masse) de CaO, 0,01 à 0,22 (% en masse) de MgO, 0,1 à 0,6 (% en masse) de Sb₂O₃, 0 à 3 (% en masse) de CeO₂, 0 à 3 (% en masse) de B₂O₃, et 0 à 3 (% en masse) de SrO ; et
une deuxième porcelaine formant une deuxième composition qui contient, tels que représentés en termes d'oxyde, des composants principaux sous la forme de : 63,0 à 69,0 (% en masse) de SiO₂, 14,8 à 17,9 (% en masse) de Al₂O₃, 0,02 à 0,28 (% en masse) de Li₂O, 1,5 à 6,8 (% en masse) de Na₂O, 8,0 à 14,0 (% en masse) de K₂O, 0,2 à 1,5 (% en masse) de CaO, 0,05 à 0,55 (% en masse) de MgO, 0,2 à 2,2 (% en masse) de Sb₂O₃, 0,1 à 3 (% en masse) de CeO₂, 0,1 à 3 (% en masse) de B₂O₃, et 0 à 3 (% en masse) de SrO.

8. Kit de porcelaine dentaire selon la revendication 7, dans lequel chacune des première et deuxième porcelaines présente, après sa combustion, un coefficient de dilatation thermique se situant dans la plage allant de 9,1 x 10⁻⁶(/°C) à 10,3 x 10⁻⁶(/°C) à une température se situant dans la plage allant de 25 (°C) à 500 (°C).

9. Kit de porcelaine dentaire définir selon la revendication 7, dans lequel chacune des première et deuxième porcelaines est préparée : en mélangeant des composés qui génèrent des oxydes à une température de fusion de verre ; en faisant fondre le mélange par le chauffage du mélange ; en broyant le mélange ; en soumettant le mélange à un traitement thermique qui est effectué à une température prédéterminée de sorte que le cristal de leucite soit précipité ; en ajoutant un pigment et une substance fluorescente au mélange ; et en broyant le mélange.
